# EUROPÄISCHE PATENTANMELDUNG

(11) **EP 1 217 610 A1**
(43) Veröffentlichungstag der Anmeldung: **26.06.2002**
(21) Anmeldenummer: 00126003.3
(22) Anmeldetag: 28.11.2000
(51) Int. Cl.: G10L 15/06, G10L 13/08, G10L 15/26, G10L 15/00

(54) **Verfahren und System zur multilingualen Spracherkennung**

(71) Anmelder: SIEMENS AKTIENGESELLSCHAFT, 80333 München (DE)
(72) Erfinder: Harengel, Steffen, 80689 Muenchen (DE); Niemoeller, Meinrad, 83607 Holzkirchen (DE)

(57) **Zusammenfassung**

Verfahren zur Spracherkennung, insbesondere zur Navigation in einem Hypertext-Navigationssystem, wobei für jedes neue Wort unter Einsatz einer, insbesondere als neuronales Netz ausgebildeten, Landessprache-Identifikationsstufe die mit einem Wahrscheinlichkeitskoeffizienten behaftete Zugehörigkeit zu mindestens einer Landessprache bzw. einem Dialekt ermittelt und die dem Wort in der Landessprache bzw. dem Dialekt mit dem größten Wert des Wahrscheinlichkeitskoeffizienten entsprechende Graphem-Phonem-Zuordnung in dem Aussprachelexikon oder mindestens einem von mehreren Aussprachelexika ergänzt wird.

## Beschreibung

Die Erfindung betrifft ein Verfahren zur Spracherkennung, insbesondere zur Navigation in einem Hypertext-Navigationssystem, aufgrund von Spracheingaben in einer Mehrzahl vorbestimmter Landessprachen oder Dialekte nach dem Oberbegriff des Anspruchs 1 sowie ein Spracherkennungssystem, insbesondere zur Durchführung des Verfahrens nach dem Oberbegriff des Anspruchs 16.

Hypertext-Systeme gewinnen immer mehr an Bedeutung in vielen Bereichen der Daten- und Kommunikationstechnik. Dabei ist ein wesentliches Merkmal aller Hypertext-Systeme die Möglichkeit einer Navigation. Zur Hyper-Text-Navigation dienen besondere Zeichenfolgen in einem Hypertext-Dokument, welche gewöhnlich als "Links" oder "Hyper-Links" bezeichnet werden.

Zur Steigerung des Bedienkomforts werden heutzutage herkömmliche akustische Spracherkennungssysteme, d. h. Systeme zur Erkennung gesprochener Sprache mit Hypertext-Systemen, die auch als "Browser" bekannt sind, integriert. Ein solches Spracherkennungssystem muß in der Lage sein, jedes Wort, welches in einem Hypertext-Dokument als Link auftreten könnte, zu erkennen. Dazu werden beim Laden einer HTML-Seite (Hypertext Markup Language-Seite) die Texte der Links dynamisch als neue Wörter dem Spracherkenner hinzugefügt. Beim Verlassen der HTML-Seite werden die Wörter wieder dem Wortschatz entnommen, so daß sich immer der optimale, für die HTML-Seite passende Wortschatz im Spracherkenner befindet.

Die DE 44 40 598 C1 der Anmelderin beschreibt ein entsprechendes Hypertext-Navigationssystem sowie ein in einem solchen Navigationssystem handhabbares Hypertext-Dokument und schließlich ein Verfahren zur Erzeugung eines derartigen Dokumentes. Hierin werden Mittel zur Adaption einer Spracherkennungseinrichtung an Inhalte von abgerufenen Hypertext-Dokumenten vorgeschlagen, welche mit einem abgerufenen Hypertext-Dokumente verknüpfte Zusatzdaten auswerten, die die Erkennung von vom Anwender angesprochenen Hyper-Links unterstützen. Weiterhin wird vorgeschlagen, die Spracherkennungseinrichtung jeweils nach dem Empfang eines abgerufenen Hypertext-Dokuments mit Hilfe allgemein gültiger Ausspracheregeln zur Erkennung der Hyper-Links einzurichten. Weiterhin ist (unter anderem) vorgesehen, daß ein spezielles Hypertext-Dokument als Zusatzdaten ein Lexikon und ein Wahrscheinlichkeitsmodell enthält, wobei das Lexikon Hyper-Links und diesen zugeordnete Phonemfolgen als Einträge enthält und das Wahrscheinlichkeitsmodell die Zuordnung eines gesprochenen Wortes oder einer Folge von gesprochenen Worten zu einem Eintrag des Lexikons ermöglicht.

Bekannterweise werden also Aussprachelexika als Wissensbasis für die Spracherkennung benutzt. In derartige Aussprachelexika wird für jedes Wort des Wortschatzes eine phonetische Transkription in einem bestimmten Format (z. B. Sampa-Format) angegeben. Es handelt sich hierbei um sogenannte "kanonische Formen", die einem Aussprachestandard entsprechen. Dabei ist die Speicherung und die Verwendung mehrerer phonetischer Transkriptionen für ein Wort möglich.

Ein wesentliches Problem solcher Spracherkennungssysteme liegt darin, daß für umfangreiche und anspruchsvolle Wortschätze sehr große Lexika erforderlich sind, was die Verarbeitungsgeschwindigkeit und die Erkennungsleistung dieser Systeme auf ein unvertretbares Maß reduziert. Selbst wenn die Verwendung von sehr großen Aussprachelexika möglich wäre, könnten auch damit nicht die zahllosen Wortneuschöpfungen sowie Eigennamen erkannt werden, die für Hypertext-Netzwerke wie das World Wide Web (www) so typisch sind.

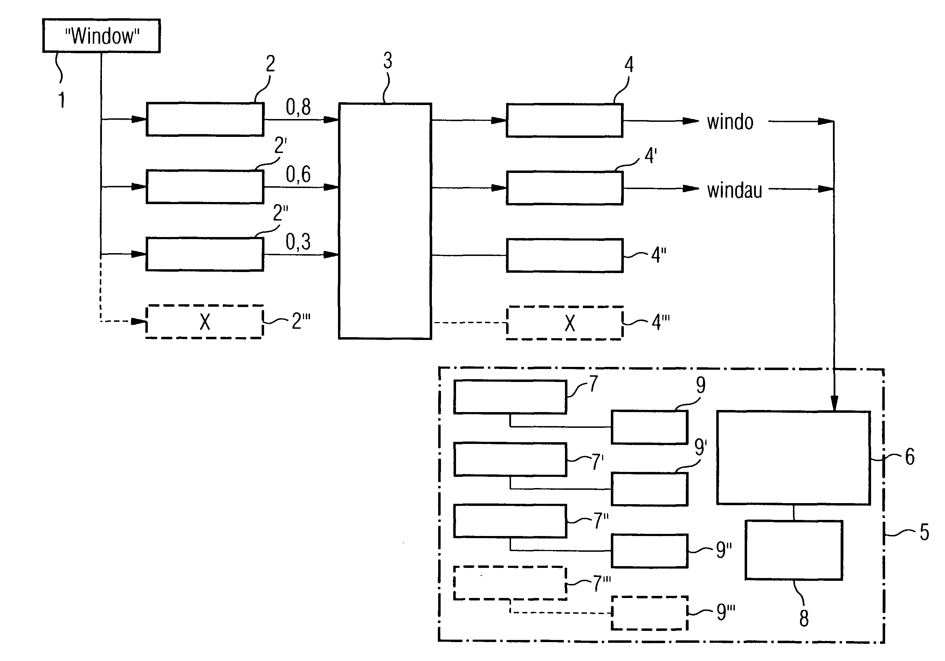

Ein grundlegendes Problem bei der Navigation in einem Hypertext-Navigationssystem besteht darin, daß die Landessprache einer HTML-Seite bzw. eines Links nicht a priori bekannt ist. Da die Abbildung der Orthographie eines Wortes in einer Phonetik von der Landessprache abhängig ist, werden die Ergebnisse einer solchen Umsetzung in realen Spracherkennungssystemen oft fehlerhaft, und somit ist die Erkennungsleistung auch entsprechend niedrig. Die akustischen Modelle, wie z. B. Hidden-Markov-Modelle, welche bei einer Spracherkennung eingesetzt werden, sind ebenfalls sprachabhängig, da die dort abgelegte Lautmodellierung durch einen Trainingsvorgang mit Sprachdaten einer bestimmten Landessprache oder einem bestimmten Dialekt generiert wird.

Ein weiteres Problem bei der Navigation in einem Hypertext-Navigationssystem, aufgrund von Spracheingaben besteht darin, daß es innerhalb einer HTML-Seite oft zu einer Mischung von Sprachen und somit auch zu verschiedenen Aussprachen kommen kann, so daß die Landessprache einer gesamten Website oft nicht eindeutig definiert werden kann.

Der Erfindung liegt daher die Aufgabe zugrunde, ein Verfahren der gattungsgemäßen Art, insbesondere zur Navigation in einem Hypertext-Navigationssystem, anzugeben, welches eine hohe Verarbeitungsgeschwindigkeit und Erkennungsleistung gewährleistet.

Diese Aufgabe wird durch ein Verfahren mit den Merkmalen des Anspruchs 1 sowie durch ein Spracherkennungssystem mit den Merkmalen des Anspruchs 16 gelöst.

Die Erfindung schließt den grundlegenden Gedanken ein, unter Einsatz einer Landessprache-Identifikationsstufe für jedes neue Wort eines Textes die mit einem Wahrscheinlichkeitskoeffizienten behaftete Zugehörigkeit zu mindestens einer Landessprache oder einem Dialekt zu ermitteln. Sie schließt weiter den Gedanken ein, für jedes neue Wort die entsprechende Graphem-Phonem-Zuordnung bei einer Landessprache bzw. einem Dialekt in einem Aussprachelexikon oder mindestens einem von mehreren Aussprachelexika einzutragen. Wenn der Wahrscheinlichkeitskoeffizient der Zugehörigkeit eines Wortes zu mindestens einer Landessprache bzw. einem Dialekt den Schwellwert übersteigt, wird die dem jeweiligen Wort entsprechende Graphem-Phonem-Zuordnung in dem Aussprachelexikon ergänzt.

Insbesondere wird für ein Hypertext-Dokument für jedes neue Wort die zutreffende (oder wahrscheinlichste) Sprache auf Wortebene bestimmt, und die Einzelergebnisse werden anschließend zu einem Gesamtergebnis gemittelt. Dabei wird durch den Einsatz eines neuronalen Netzes die Zugehörigkeit eines Wortes zu einer Landessprache bzw. einem Dialekt mit einer hohen Wahrscheinlichkeit ermittelt.

Vorzugsweise werden für jedes neue Wort die Wahrscheinlichkeitskoeffizienten dafür, daß das Wort einer bestimmten Landessprache bzw. einem Dialekt zugehört, einer Landessprache-Zuordnungsstufe zugeführt. In dieser Landessprache-Zuordnungsstufe werden die Wahrscheinlichkeitskoeffizienten ausgewertet, wobei die Auswertung anhand ihrer Relation zueinander oder zu dem vorbestimmten Schwellwert durchgeführt wird. Für jedes ausgewertete Wort wird eine landessprach- oder dialektspezifische Graphem-Phonem-Zuordnung in mindestens einer von mehreren Phonem-Erkennungsstufen erzeugt.

Bevorzugt wird anhand der Orthographie des Wortes die Ermittlung der Zugehörigkeit zu einer Landessprache bzw. einem Dialekt in der Landessprache-Identifikationsstufe ausgeführt. Somit können unbekannte Worte erkannt werden, da eine als neuronales Netz ausgebildete Landessprache-Identifikationsstufe die Charakteristik der Orthographie einer Sprache lernt.

Es ist von Vorteil, daß in den Phonem-Erkennungsstufen jeweils Aussprachen des Wortes in der spezifischen Landessprache oder dem Dialekt dynamisch generiert werden. Diese dynamisch generierten Aussprachen werden dann zur Laufzeit in das Aussprachelexikon oder das landessprach- oder dialektspezifische Aussprachelexikon eines Spracherkenners eingeführt, so daß dieser daraus entsprechende HMM-Zustandsfolgen generieren und in seinen Suchraum eintragen kann.

In einer Ausführungsform wird die Landessprache-Identifikationsstufe durch ein einziges neuronales Netz gebildet. Das neuronale Netz weist für jede vorbestimmte Sprache bzw. jeden Dialekt einen Ausgangsknoten auf. Dieser Ausgangsknoten gibt dann die Wahrscheinlichkeitskoeffizienten an, daß ein dem neuen Wort entsprechendes Graphem-Fenster der entsprechenden Landessprache bzw. dem Dialekt angehört. Es kann aber auch die Landessprache-Identifikationsstufe durch eine Mehrzahl neuronaler Netze gebildet werden, welche jeweils einen einzigen Ausgangsknoten aufweisen. Der Ausgangsknoten gibt den Wahrscheinlichkeitskoeffizienten dafür an, daß ein Graphem-Fenster, welches einem neuen Wort entspricht, der entsprechenden Landessprache oder dem Dialekt angehört.

Gemäß einer weiteren sinnvollen Ausführung wird ein zusammenhängendes, landessprach- bzw. dialektspezifisches neuronales Netz verwendet, in welchem die Ermittlung der Landessprachebzw. Dialektzugehörigkeit eines neuen Wortes und die Erzeugung einer landessprach- bzw. dialektspezifischen Graphem-Phonem-Zuordnung erfolgt. Dieses neuronale Netz enthält in der Ausgangsschicht Knoten für die Sprachidentifikation (Deutsch, Englisch, etc.) und die Phonemzuordnung.

Bevorzugt wird durch eine Multiplikation der Wahrscheinlichkeitskoeffizienten des Wortes für die entsprechende Landessprache bzw. den entsprechenden Dialekt in der Landessprache-Identifikationsstufe aus graphemweise bestimmten Wahrscheinlichkeitskoeffizienten ermittelt.

In den Phonem-Erkennungsstufen wird bevorzugt für jedes Graphem eine Zuordnungswahrscheinlichkeit für alle zuordenbaren Phoneme durch einen Neuronales-Netz-Berechnungsvorgang ermittelt. Dabei wird sich aus der Reihung der Phoneme mit den höchsten Zuordnungswahrscheinlichkeiten für alle Grapheme die gültige Phonemfolge für das neue Wort ergeben.

Für jedes neuronale Netz ist ein Trainingsvorgang erforderlich, wobei als Trainingsmaterial für jede Sprache bzw. jeden Dialekt ein Aussprachelexikon herangezogen wird. Das Aussprachelexikon enthält die jeweiligen Graphemfolgen (Wörter) sowie die dazugehörigen Phonemfolgen (Aussprachen). Das neuronale Netz wird insbesondere mittels eines iterativen Verfahrens trainiert, bei welchem als Lernregel speziell die sogenannte "Error Backpropagation" eingesetzt wird. Bei diesem Verfahren wird der mittlere quadratische Fehler minimiert. Mit dieser Lernregel ist die Berechnung von Rückschlußwahrscheinlichkeiten möglich, und beim Training werden diese Rückschlußwahrscheinlichkeiten für alle Ausgangsknoten für die vorgegebenen Graphem-Fenster der Eingangsschicht berechnet.

Das Netz wird in den Trainingsmustern in mehreren Iterationen trainiert, wobei für jede Iteration die Trainingsreihenfolge vorzugsweise zufällig bestimmt wird. Nach jeder Iteration wird mit einem vom Trainingsmaterial unabhängigen Validierungssatz die erzielte Zuordnungsgenauigkeit geprüft. Der Trainingsvorgang wird solange fortgeführt, wie nach jeder folgenden Iteration eine Erhöhung der Zuordnungsgenauigkeit erzielt wird. An einem Punkt, bei dem die Zuordnungsgenauigkeit für den Validierungssatz sich nicht mehr erhöht, wird also das Training beendet.

Nach Abschluß des Trainings, also nachdem das neuronale Netz gelernt ist, wird das Aussprachelexikon aktualisiert, wobei die dort eingetragenen Phonemfolgen der jeweiligen Sprache zugeordnet werden.

Ihre aus derzeitiger Sicht wichtigste Anwendung findet die vorgeschlagene Lösung beim Navigieren von HTML-Seiten in einem nach einem IP-Protokoll organisierten Datennetz, insbesondere dem Internet. Textdokumente sind hier die Hypertext-Dokumente, wobei neue Worte insbesondere durch Hyper-Links und/oder Systembefehle gebildet sind. Grundsätzlich ist die Lösung aber auch für andere Anwendungen der Sprachsteuerung unter Einsatz von aus Textdokumenten stammenden Termini anwendbar.

Durch Auswertung der auf Graphem-Ebene gewonnenen Wahrscheinlichkeitskoeffizienten bzw. der auf Wortebene gewonnene Wahrscheinlichkeitskoeffizienten wird für ein zusammenhängendes Textdokument, insbesondere ein Hypertext-Dokument, eine mit einem Wahrscheinlichkeitskoeffizienten behaftete Zuordnungs-Aussage zu einer Landessprache bzw. einem Dokument ermittelt und dann in Abhängigkeit vom Auswertungsergebnis ein landessprach- bzw. dialektspezifisches oder mehrsprachiges HMM aktiviert.

Zur Durchführung des Verfahrens wird ein Spracherkennungssystem angegeben, welches zur Verarbeitung von Spracheingaben in einer Mehrzahl vorbestimmter Landessprachen oder Dialekte, das ein dynamisch aktualisiertes Aussprachelexikon aufweist, eine Landessprache-Identifikationsstufe enthält, welche zur Ermittlung der mit einem Wahrscheinlichkeitskoeffizienten behafteten Zugehörigkeit jedes neuen Wortes zumindest einer Landessprache bzw. einem Dialekt zugeordnet wird.

Vorzugsweise ist der Landessprache-Identifikationsstufe eine Landessprache-Zuordnungsstufe nachgeschaltet, welche zur Auswertung der Wahrscheinlichkeitskoeffizienten jedes Wortes in ihrer Relation zueinander und/oder zu einem vorbestimmten Schwellwert angibt. Zur Erzeugung mindestens einer für das entsprechende Wort in einer Landessprache oder einem Dialekt gültigen Graphem-Phonem-Zuordnung werden eine Mehrzahl von der Landessprache-Zuordnungsstufen nachgeschalteten Phonem-Erkennungsstufen verwendet. Die Landessprache-Identifikationsstufen und die Phonem-Erkennungsstufen sind in einer sinnvollen Ausführung als neuronales Netz ausgebildet. Bevorzugt ist das neuronale Netz ein schichtorientiertes vorwärts gerichtetes Netz mit Vollvermaschung zwischen den einzelnen Schichten.

Das Spracherkennungssystem enthält geeignete Mittel zur statistischen Auswertung der Wahrscheinlichkeitskoeffizienten auf Graphem- bzw. Wort-Ebene. Dadurch wird die Zuordnung des gesamten Textdokuments, insbesondere Hypertext-Dokuments, zu einer vorbestimmten Landessprache bzw. zu einem Dialekt kennzeichnenden Gesamt-Wahrscheinlichkeitskoeffizienten abgeleitet.

Vorteile und Zweckmäßigkeiten der Erfindung ergeben sich im übrigen aus den Unteransprüchen sowie der nachfolgenden Beschreibung eines Ausführungsbeispiels anhand der Figur. Diese zeigt ein schematisches Funktions-Blockschaltbild für die Realisierung der Erfindung.

Das Spracherkennungssystem weist eine Eingabeeinrichtung 1 zur Eingabe eines neuen Wortes, eine Landessprache-Identifikationsstufe 2, 2', 2'', 2''' für die Sprachen Deutsch, Englisch und Französisch und eine weitere Sprache X zur Ermittlung der mit einem Wahrscheinlichkeitskoeffizienten behafteten Zugehörigkeit jedes neuen Wortes zu einer dieser Landessprachen, eine den Landessprache-Identifikationsstufen 2, 2', 2'', 2''' nachgeschaltete Landessprache-Zuordnungsstufe 3 zur Auswertung der Wahrscheinlichkeitskoeffizienten jedes Wortes für jede dieser Sprachen in ihrer Relation zueinander und zu einem vorbestimmten Schwellwert sowie der Landessprache-Zuordnungsstufe 3 nachgeschaltete Phonem-Erkennungsstufen 4, 4', 4'', 4''' für die Sprachen Deutsch, Englisch und Französisch und eine weitere Sprache X zur Erzeugung mindestens einer für das entsprechende Wort einer Landessprache gültigen Graphem-Phonem-Zuordnung auf. Weiterhin umfaßt das System einen HMM-Spracherkenner 5, welcher ein gemischtes Aussprachelexikon 6 sowie weitere, sprachspezifische Aussprache-Lexika 7, 7', 7'', 7''' für die Sprachen Deutsch, Englisch und Französisch und eine weitere Sprache X enthält und in dem entsprechend ein gemischtes HMM 8 und landessprachspezifische HMM 9, 9', 9'' und 9''' implementiert sind.

Bei diesem Ausführungsbeispiel wird für ein komplettes Hypertext-Dokument für alle zu erkennenden Zeichenfolgen, speziell möglichen Links, eine Landessprache auf Wortebene mittels der Landessprache-Zuordnungsstufe 3 bestimmt. Die Worte werden analysiert, und diese Einzelergebnisse werden dann in einem Gesamtergebnis in dem HMM-Spracherkenner 5 hinzugefügt, wobei entweder ein sprachspezifisches HMM oder aber auch ein multilinguales HMM aktiviert wird.

Wenn ein dem Spracherkennungssystem unbekanntes Wort, z. B. das englische Wort "Window" erkannt werden muß, wird das neue Wort mittels der Eingabeeinrichtung 1 in Form von Graphem-Folgen in die als neuronales Netz ausgebildeten Landessprache-Identifikationsstufe 2, 2', 2'', 2''' hineingeschoben. Dies geschieht über das jeweilige Graphem-Fenster der NN-Landessprache-Identifkationsstufe 2, 2', 2'', 2'''. Der mittlere Knoten der jeweiligen Eingangsschicht ist hierbei das zu betrachtende Graphem. Für dieses Graphem wird die mit einem Wahrscheinlichkeitskoeffizienten behaftete Zugehörigkeit zu mindestens einer Landessprache ermittelt. Der Gesamtscore für das gesamte Wort wird durch Aufmultiplizieren der einzelnen Zuordnungswahrscheinlichkeiten gebildet, die sich bei dem Hineinschieben des Wortes in das Eingangsfenster mit zuhöriger NN-Berechnung für die einzelnen Grapheme ergeben.

Jede Landessprache-Identifikationsstufe 2, 2', 2'', 2''' liefert nun einen Wahrscheinlichkeitskoeffizienten für die jeweilige Sprache im Intervall (0 ... 1) an die Landessprache-Zuordnungsstufe 3. Im Beispiel ist für das Wort "Window" ein Wahrscheinlichkeitskoeffizient für Englisch 0,8, für Deutsch 0,6 und für Französisch 0,3 ermittelt. Diese Wahrscheinlichkeitskoeffizienten werden in der Landessprache-Zuordnungsstufe 3 hinsichtlich ihrer Relation zueinander und zu dem vorbestimmten Schwellwert ausgewertet.

Im Ergebnis dieser Auswertung für das in einem Hypertext-Dokument aufgetretene Wort "Window" wird in den entsprechenden Phonem-Erkennungsstufen 4, 4' für Englisch und Deutsch für das Wort "Window" eine landessprachspezifische Graphem-Phonem-Zuordnung erzeugt. Da der Wahrscheinlichkeitskoeffizient für Französisch unterhalb eines hier als 0,5 angenommenen Schwellwertes liegt, wird das Wort der Phonem-Erkennungsstufe 4'' für Französisch nicht zugeführt. Die beiden gebildeten Graphem-Phonem-Zuordnungen für das Wort "Window" lauten wie folgt:
windo (Englisch)
windau (Deutsch).

Die ermittelten Phonemfolgen in Englisch und Deutsch werden dann dem gemischten Aussprachelexikon 6 des HMM-Spracherkenners 5 hinzugefügt. Somit werden in das Aussprachelexikon 6 zwei Aussprachevarianten für das Wort "Window" eingetragen.

Dieses Beispiel gilt nicht nur für Englisch, Deutsch und Französisch, sondern kann auch auf andere Sprachen erweitert werden, sowie auf verschiedene Dialekte innerhalb einer Landessprache.

Die Erfindung löst außerdem grundsätzlich das Problem des sogenannten Sprachen-Mix innerhalb einer Webseite. Beinhaltet eine Website z. B. den Link "Windows 2000", so neigen die deutschen Benutzer dazu, den ersten Teil "Windows" englisch und den zweiten Teil "2000" deutsch auszusprechen. Mit einem nur auf einer Landessprache beruhenden Aussprachelexikon ist eine Hypertext-Navigation per Sprachsteuerung unter diesen Bedingungen nicht möglich. Ein gemischtes Aussprachelexikon oder die Nutzung mehrerer Aussprachelexika - hier für die Sprachen Englisch und Deutsch - ermöglicht jedoch die voneinander unabhängige, landessprachbezogene Phonem-Erkennung der beiden Bestandteile des erwähnten Links und somit die "gemischtsprachige" Sprachsteuerung des genannten Link. Wenn mehrere Landessprache-Identifikationsstufen aktiviert werden, werden nämlich auch mehrere Aussprachevarianten eines Links in das Aussprachelexikon hinzugefügt. Somit werden auf diese Weise gemischte Links leicht erkennbar.

Die Erfindung ist nicht nur auf die oben erwähnten bevorzugten Ausgestaltungen und Aspekte beschränkt, sondern im Rahmen der Ansprüche auch in einer Reihe von Abwandlungen ausführbar, die im Rahmen fachgemäßen Handelns liegen.

## Patentansprüche

1. Verfahren zur Spracherkennung, insbesondere zur Navigation in einem Hypertext-Navigationssystem, aufgrund von Spracheingaben in einer Mehrzahl vorbestimmter Landessprachen oder Dialekte in einem ein Aussprachelexikon aufweisenden Spracherkenner, wobei das Aussprachelexikon anhand eines aktuellen Textdokuments um neue Worte als Graphem-Phonem-Zuordnungen ergänzt wird,
**dadurch gekennzeichnet, daß**
für jedes neue Wort unter Einsatz einer, insbesondere als neuronales Netz ausgebildeten, Landessprache-Identifikationsstufe die mit einem Wahrscheinlichkeitskoeffizienten behaftete Zugehörigkeit zu mindestens einer Landessprache bzw. einem Dialekt ermittelt und
die dem Wort in der Landessprache bzw. dem Dialekt mit dem größten Wert des Wahrscheinlichkeitskoeffizienten oder jeder Landessprache bzw. jedem Dialekt, für den der Wahrscheinlichkeitskoeffizient einen vorbestimmten Schwellwert übersteigt, entsprechende Graphem-Phonem-Zuordnung in dem Aussprachelexikon oder mindestens einem von mehreren Aussprachelexika ergänzt wird.

2. Verfahren nach Anspruch 1,
**dadurch gekennzeichnet, daß**
die Wahrscheinlichkeitskoeffizienten jedes Wortes einer Landessprache-Zuordnungsstufe zugeführt und in dieser hinsichtlich ihrer Relation zueinander und/oder zu dem vorbestimmten Schwellwert ausgewertet werden und
im Ergebnis der Auswertung für das jeweilige Wort eine landessprach- oder dialektspezifische Graphem-Phonem-Zuordnung in mindestens einer von mehreren Phonem-Erkennungsstufen erzeugt wird.

3. Verfahren nach einem der vorhergehenden Ansprüche, insbesondere nach Anspruch 1 oder 2,
**dadurch gekennzeichnet, daß**
die Ermittlung der Zugehörigkeit zu einer Landessprache bzw. einem Dialekt in der Landessprache-Identifikationsstufe anhand der Orthographie des Wortes ausgeführt wird.

4. Verfahren nach einem der vorhergehenden Ansprüche, insbesondere nach Anspruch 2 oder 3,
**dadurch gekennzeichnet, daß**
in den Phonem-Erkennungsstufen jeweils Aussprachen des Wortes in der spezifischen Landessprache oder dem Dialekt dynamisch generiert und im Aussprachelexikon oder dem landessprach- oder dialektspezifischen Aussprachelexikon ergänzt werden.

5. Verfahren nach einem der vorhergehenden Ansprüche, insbesondere nach Anspruch 4,
**dadurch gekennzeichnet, daß**
der Spracherkenner aus den dynamisch generierten Aussprachen HMM-Zustandsfolgen generiert und in seinen Suchraum einträgt.

6. Verfahren nach einem der vorangehenden Ansprüche,
**dadurch gekennzeichnet, daß**
die Landessprache-Identifikationsstufe durch ein einziges neuronales Netz gebildet ist, welches für jede vorbestimmte Sprache bzw. jeden Dialekt einen Ausgangsknoten aufweist, wobei jeder Ausgangsknoten einen Wahrscheinlichkeitskoeffizienten dafür angibt, daß ein dem neuen Wort entsprechendes Graphem-Fenster der entsprechenden Landessprache bzw. dem Dialekt angehört.

7. Verfahren nach einem der einem der vorhergehenden Ansprüche, insbesondere nach Anspruch 1 bis 5,
**dadurch gekennzeichnet, daß**
die Landessprache-Identifikationsstufe durch eine Mehrzahl neuronaler Netze gebildet ist, die jeweils einen einzigen Ausgangsknoten aufweisen, welcher den Wahrscheinlichkeitskoeffizienten dafür angibt, daß ein dem neuen Wort entsprechendes Graphem-Fenster der entsprechenden Landessprache oder dem Dialekt angehört.

8. Verfahren nach einem der vorangehenden Ansprüche,
**dadurch gekennzeichnet, daß**
die Ermittlung der Landessprach- bzw. Dialekt-Zugehörigkeit des neuen Wortes und die Erzeugung einer landessprach- bzw. dialektspezifischen Graphem-Phonem-Zuordnung in einem zusammenhängenden, landessprach- bzw. dialektspezifischen neuronalen Netz erfolgt, welches in der Ausgangsschicht Knoten für die Sprachidentifikation und die Phonemzuordnung aufweist.

9. Verfahren nach einem der vorangehenden Ansprüche,
**dadurch gekennzeichnet, daß**
in der Landessprache-Identifikationsstufe aus graphemweise bestimmten Wahrscheinlichkeitskoeffizienten durch Multiplikation der Wahrscheinlichkeitskoeffizienten des Wortes für die entsprechende Landessprache bzw. den entsprechenden Dialekt ermittelt wird.

10. Verfahren nach einem der vorhergehenden Ansprüche, insbesondere nach einem der Ansprüche 2 bis 9,
**dadurch gekennzeichnet, daß**
in den Phonem-Erkennungsstufen mittels eines Neuronales-Netz-Berechnungsvorgangs für jedes Graphem eine Zuordnungswahrscheinlichkeit für alle zuordenbaren Phoneme ermittelt und das Phonem mit der höchsten Zuordnungswahrscheinlichkeit ausgewählt wird derart, daß sich aus der Addition der Phoneme mit den höchsten Zuordnungswahrscheinlichkeiten für alle Grapheme die gültige Phonemfolge für das neue Wort ergibt.

11. Verfahren nach einem der vorangehenden Ansprüche,
**dadurch gekennzeichnet, daß**
für das oder jedes neuronale Netz ein Trainingsvorgang als iterativer Vorgang, insbesondere aufgrund des Verfahrens der "Error Backpropagation" ausgeführt wird, wobei als Trainingsmaterial für jede Sprache ein Aussprachelexikon mit den darin enthaltenen Graphemfolgen und die dazugehörigen Phonemfolgen herangezogen wird.

12. Verfahren nach einem der vorhergehenden Ansprüche, insbesondere nach Anspruch 11,
**dadurch gekennzeichnet, daß**
- das neuronale Netz mit den Trainingsmustern in mehreren Iterationen trainiert wird,
- für jede Iteration eine Reihenfolge von Trainingsmustern mittels eines Zufallsgenerators bestimmt wird,
- nach jeder Iteration anhand eines vom Trainingsmaterial unabhängigen Validierungssatzes, die Zuordnungsgenauigkeit geprüft wird,
- die Iterationen solange fortgeführt werden, bis die Zuordnungsgenauigkeit des Validierungssatzes nicht mehr erhöht wird.

13. Verfahren nach einem der vorangehenden Ansprüche,
**dadurch gekennzeichnet, daß**
als Textdokumente Hypertext-Dokumente benutzt werden, wobei neue Worte insbesondere durch Hyper-Links und/oder Systembefehle gebildet sind.

14. Verfahren nach einem der vorangehenden Ansprüche,
**dadurch gekennzeichnet, daß**
für ein zusammenhängendes Textdokument, insbesondere ein Hypertext-Dokument, eine mit einem Wahrscheinlichkeitskoeffizienten behaftete Zuordnungs-Aussage zu einer Landessprache bzw. einem Dialekt durch Auswertung der auf Graphem-Ebene gewonnenen Wahrscheinlichkeitskoeffizienten bzw. der auf Wort-Ebene gewonnene Wahrscheinlichkeitskoeffizienten ermittelt und in Abhängigkeit vom Auswertungsergebnis ein landessprachbzw. dialektspezifisches oder mehrsprachiges HMM aktiviert wird.

15. Spracherkennungssystem, insbesondere zur Durchführung des Verfahrens nach einem der vorangehenden Ansprüche, zur Verarbeitung von Spracheingaben in einer Mehrzahl vorbestimmter Landessprachen oder Dialekte, das ein dynamisch aktualisiertes Aussprachelexikon aufweist,
**gekennzeichnet durch**
eine Landessprache-Identifikationsstufe zur Ermittlung der mit einem Wahrscheinlichkeitskoeffizienten behafteten Zugehörigkeit jedes neuen Wortes zumindest einer Landessprache bzw. einem Dialekt.

16. Spracherkennungssystem nach Anspruch 15, **gekennzeichnet durch**
eine der Landessprache-Identifikationsstufe nachgeschaltete Landessprache-Zuordnungsstufe zur Auswertung der Wahrscheinlichkeitskoeffizienten jedes Wortes in ihrer Relation zueinander und/oder zu einem vorbestimmten Schwellwert und
eine Mehrzahl von der Landessprache-Zuordnungsstufen nachgeschalteten Phonem-Erkennungsstufen zur Erzeugung mindestens jeweils einer für das entsprechende Wort in einer Landessprache oder einem Dialekt gültigen Graphem-Phonem-Zuordnung.

17. Spracherkennungssystem nach Anspruch 15 oder 16,
**dadurch gekennzeichnet, daß**
die Landessprache-Identifikationsstufe und/oder die Phonem-Erkennungsstufen als neuronales Netz, insbesondere als schichtorientiertes vorwärts gerichtetes Netz mit Vollvermaschung zwischen den einzelnen Schichten, ausgebildet ist.

18. Spracherkennungssystem nach einem der Ansprüche 15 bis 17, insbesondere Anspruch 17,
**dadurch gekennzeichnet, daß**
die Landessprache-Identifikationsstufe als einzelnes neuronales Netz mit mehreren Ausgangsknoten für jeweils eine Landessprache bzw. einen Dialekt ausgebildet ist.

19. Spracherkennungssystem nach einem der Ansprüche 15 bis 18, insbesondere Anspruch 18,
**dadurch gekennzeichnet, daß**
jeweils eine Landessprache-Identifikationsstufe und eine Phonem-Erkennungsstufe für jede vorbestimmte Landessprache bzw. jeden Dialekt als zusammenhängendes neuronales Netz ausgebildet sind, welches in der Ausgangsschicht Knoten für die Sprachidentifikation und die Phonem-Zuordnung aufweist.

20. Spracherkennungssystem nach einem der Ansprüche 15 bis 19, insbesondere Anspruch 17,
**dadurch gekennzeichnet, daß**
die Landessprache-Identifikationsstufe für jede vorbestimmte Landessprache bzw. jeden Dialekt ein neuronales Netz mit jeweils einem Ausgangsknoten aufweist.

21. Spracherkennungssystem nach einem der Ansprüche 15 bis 20,
**gekennzeichnet durch**
Mittel zur statistischen Auswertung der Wahrscheinlichkeitskoeffizienten auf Graphem- bzw. Wort-Ebene zur Ableitung eines die Zuordnung des gesamten Textdokuments, insbesondere Hypertext-Dokuments, zu einer vorbestimmten Landessprache bzw. zu einem Dialekt kennzeichnenden Gesamt-Wahrscheinlichkeitskoeffizienten.
